# EUROPÄISCHE PATENTSCHRIFT

(11) **EP 1 660 786 B1**
(45) Veröffentlichungstag und Bekanntmachung des Hinweises auf die Patenterteilung: **28.02.2007**
(21) Anmeldenummer: 04764648.4
(22) Anmeldetag: 26.08.2004
(51) Int. Cl.: F16G 13/06

(54) **MEHRFACHKETTE**
MULTIPLE CHAIN
CHAINE MULTIPLE

(30) Priorität: 01.09.2003 DE 20313779 U
(43) Veröffentlichungstag der Anmeldung: 31.05.2006
(73) Patentinhaber: Arnold & Stolzenberg GmbH, 37557 Einbeck (DE)
(72) Erfinder: CENAC, Christophe, 37574 Einbeck (DE); RAGNITZ, Detlef, 37586 Dassel (DE)
(74) Vertreter: Pfenning, Meinig & Partner GbR
(86) Internationale Anmeldenummer: PCT/EP2004/009682
(87) Internationale Veröffentlichungsnummer: WO 2005/024269

(56) Entgegenhaltungen:
- EP-A- 0 974 770
- DE-B- 1 030 122
- DE-U- 20 007 115
- FR-A- 1 267 585

## Beschreibung

Die Erfindung betrifft eine Mehrfachkette mit durch Kettenbolzen gelenkig miteinander verbundenen Kettengliedern nach dem Oberbegriff des Hauptanspruchs, wie z.B. in EP 0 974 770 A1 Abbildung 2 offenbart.
Es ist bekannt, Gelenkketten und Treibketten, insbesondere Buchsenketten und Rollenketten als Mehrfachketten auszuführen, um dadurch gegenüber entsprechenden einfachen Ketten eine höhere Belastbarkeit und bessere Haltbarkeit zu erreichen. Bei derartigen Mehrfachketten besteht ein einzelnes Kettenglied nicht nur aus zwei Außenlaschen oder zwei Innenlaschen, die zwei aufeinander folgende Kettenbolzen verbinden, sondern darüber hinaus zumindest aus einer zusätzlichen, zwischen den Außenlaschen angeordneten Zwischenlasche oder zumindest zwei weiteren Innenlaschen, also mindesten vier parallel verlaufenden Innenlaschen. Dabei sitzen auf jedem Kettenbolzen jeweils zwei Innenlaschen an zwei Enden einer Buchse, welche den entsprechenden Kettenbolzen umgibt und drehbar um diesen gelagert ist. Im einfachsten Fall handelt es sich bei einer Mehrfachkette um eine Duplexkette, bei der auf jedem Kettenbolzen zwei derartige Buchsen und vier Innenlaschen sitzen, gebräuchlich sind auch Triplex- und Vierfachketten, bei denen auf jedem Kettenbolzen drei Buchsen und sechs Innenlaschen bzw. vier Buchsen und acht Innenlaschen sitzen. Üblicherweise sind dabei die Innenlaschen jeweils mit den angrenzenden Buchsen fest verbunden oder sogar aus einem Stück gefertigt. In gleicher Weise sind bei üblichen Ausführungen gattungsgemäßer Mehrfachketten die außen, also an jeweils zwei Enden der Kettenbolzen, sitzenden Außenlaschen fest mit den entsprechenden Kettenbolzen verbunden, beispielsweise durch eine Presspassung.

Die Ausführung einer Kette als Mehrfachkette in der beschriebenen Art dient zur Steigerung der Belastbarkeit, insbesondere zur Erzielung einer höheren Dauerfestigkeit. Bei gattungsgemäßen Mehrfachketten nach dem Stand der Technik erweist es sich jedoch als nachteilig, dass die erreichte Steigerung der Belastbarkeit bei gegebenem Materialaufwand nicht hoch genug ausfällt. Insbesondere ist die Belastbarkeit einer Duplexkette nach dem Stand der Technik nicht doppelt so hoch wie die einer entsprechend dimensionierten einfachen Kette, die Belastbarkeit einer herkömmlichen Triplexkette nicht dreimal so hoch und die einer Vierfachkette nicht viermal so hoch. Ursächlich dafür sind ungleichmäßige Biegungen der bei Mehrfachketten länger ausfallenden Kettenbolzen und eine unter anderen dadurch bedingte ungleichmäßige Belastung von weiter innen und weiter außen liegenden Laschen.

Der Erfindung liegt also die Aufgabe zugrunde, unter Berücksichtigung dieses Problems eine Mehrfachkette zu entwickeln, die bei gegebenem Materialaufwand eine höchstmögliche Zugbelastung aushält.

Diese Aufgabe wird erfindungsgemäß gelöst durch eine Mehrfachkette mit den kennzeichnenden Merkmalen des Hauptanspruchs in Verbindung mit den Merkmalen des Oberbegriffs des Hauptanspruchs. Vorteilhafte Ausgestaltungen und Weiterentwicklungen der Erfindung ergeben sich mit den Merkmalen der Unteransprüche.

Dadurch, dass die einer Zwischenlasche nächst liegenden Innenlaschen eine geringere Belastbarkeit haben als die einer Außenlasche nächstliegenden, also bezogen auf die ganze Mehrfachkette weiter außen liegenden Innenlaschen, erreicht man im Gegensatz zu herkömmlichen Mehrfachketten, dass keine der Innenlaschen eine im Verhältnis zur Belastung dieser Innenlasche überflüssig große oder zu geringe Stärke hat. In einer einfachen Realisierung ist die geringere Belastbarkeit der erstgenannten Innenlaschen dabei durch einen geringeren Querschnitt gegenüber den Innenlaschen, die einer Außenlasche nächstliegend angeordnet sind, gegeben. Dabei ist mit dem Querschnitt einer Lasche jeweils deren kleinster Querschnitt in einer zur Längsrichtung der Mehrfachkette senkrecht stehenden Ebene bezeichnet. Für eine besonders einfache Ausführung bietet es sich dabei an, den geringeren Querschnitt weiter innen liegender Innenlaschen durch eine geringere Dicke in Bolzenrichtung zu realisieren, wobei die einzelnen Innenlaschen ansonsten zum Zweck einer möglichst einheitlichen Herstellung vorzugsweise eine identische Form haben. Eine Alternative wäre eine Herstellung der verschiedenen Innenlaschen aus gleich dickem Material, dafür aber mit unterschiedlicher Höhe. Möglich ist auch eine Realisierung verschiedener Belastbarkeiten weiter innen liegender Laschen gegenüber weiter außen liegenden Laschen durch eine Verwendung verschiedener Materialien, beispielsweise durch einen Einsatz gehärteten Stahls für die den Außenlaschen nächstliegenden Innenlaschen.

Der damit vorgeschlagenen Ausführung von Mehrfachketten liegt die Beobachtung zugrunde, dass sich bei herkömmlichen Mehrfachketten weiter innen liegende Laschen langsamer abnützen als weiter außen liegende Laschen, dass weiter innen liegende Laschen also offenbar weniger belastet werden als weiter außen liegende Laschen. Das gilt insbesondere für die Innenlaschen, weil diese mit Ausnahme der den Außenlaschen jeweils nächst liegenden Innenlaschen stets paarweise in sehr geringem Abstand nebeneinander zu liegen kommen. Für Mehrfachketten der hier vorgeschlagenen Art erhält man dadurch eine bei gegebenem Materialaufwand deutlich erhöhte Belastbarkeit bzw. einen bei gegebener Belastbarkeit entsprechend reduzierten Materialaufwand, und zwar ohne Inkaufnahme eines höheren konstruktiven Aufwands.

Eine durch sämtliche Innenlaschen verhältnismäßig gleich bleibende Materialbelastung erhält man, wenn die einer Zwischenlasche nächst liegenden Innenlaschen einen Querschnitt von zwischen 65% und 85% des Querschnitts der den Außenlaschen nächst liegenden Innenlaschen haben. Ein in dieser Hinsicht besonders ausgewogenes Verhältnis ergibt sich, wenn der erstgenannte Querschnitt einen Wert von zwischen 70% und 80% des zweitgenannten Querschnitts hat. Zur Ermittlung eines optimalen Werts wäre dabei nicht zuletzt zu berücksichtigen, wie flexibel die Kettenbolzen sind.

Da die Außenlaschen dagegen im wesentlichen genauso stark belastet werden wie die den Außenlaschen nächst liegenden Innenlaschen, sind Ausführungen vorzuziehen, bei denen die Außenlaschen und die ihnen nächst liegenden Innenlaschen eine um nicht mehr als 5% abweichende, besser noch eine identische Belastbarkeit haben, im Fall einer Herstellung aus gleichartigem Material also einen um nicht mehr als 5 % abweichenden, vorzugsweise identischen Querschnitt. Aus entsprechenden Gründen bieten sich Ausführungen an, bei denen zwischen zwei auf einem Kettenbolzen benachbart angeordneten Buchsen jeweils genau eine Zwischenlasche sitzt, wobei diese Zwischenlasche eine Belastbarkeit oder einen Querschnitt hat, die bzw. der doppelt so groß ist wie die Belastbarkeit bzw. der Querschnitt der beiden zunächst liegenden Innenlaschen.
Dabei bringen Abweichungen von bis zu 5% allerdings wieder keine merklichen Nachteile mit sich. Als Alternative kommen Ausführungen in Frage, bei denen zwischen zwei auf einem Kettenbolzen nebeneinander angeordneten Buchsen jeweils zwei gleichartige Zwischenlaschen sitzen, die jeweils einen zur dazu nächst liegenden Innenlasche identischen oder um nicht mehr als 5% abweichenden Querschnitt oder allgemein eine möglichst identische und zunächst nicht mehr als 5 % abweichende Belastbarkeit haben. Die letztgenannte Ausführung bringt den Vorteil mit sich, dass die Zwischenlaschen und die ihnen nächst gelegenen Innenlaschen einander gleichen können. Wie für die Innenlaschen gilt auch für die übrigen Laschen, dass sich Laschen mit unterschiedlichen Querschnitten unter Umständen nur durch ihre Dicke, also ihre Abmessung in Bolzenrichtung, voneinander unterscheiden.

Um unnötige Reibungen einzelner Teile gegeneinander zu vermeiden, ist es vorteilhaft, wenn die Außenlaschen und möglichst auch die Zwischenlaschen fest sitzend auf den beiden Kettenbolzen befestigt sind, welche sie verbinden. Eine fest sitzende Verbindung der Außenlaschen und/oder der Zwischenlasche mit den entsprechenden Kettenbolzen lässt sich dabei besonders einfach durch Presspassung erreichen. Aus den gleichen Gründen bietet es sich an, die Innenlaschen fest sitzend auf den entsprechenden Buchsen zu befestigen, vorzugsweise durch Presspassung, oder sogar jeweils zwei Innenlaschen und zwei Buchsen aus einem Stück gefertigt auszuführen.

Ein unnötig hoher Verschleiß der Mehrfachkette durch in die Mehrfachkette eingreifende Kettenräder lässt sich besonders effektiv dadurch vermeiden, dass auf jeder zwei Innenlaschen verbindenden Buchse eine drehbar gelagerte, ebenfalls buchsenförmige Rolle angeordnet ist, die Mehrfachkette also als Rollenkette ausgeführt ist.

Als Material für die Kettenbolzen, die Buchsen oder die ganze Mehrfachkette bietet sich Stahl oder Chromnickelstahl an, zur Erhöhung der Stabilität vorzugsweise gehärteter Stahl oder gehärteter Chromnickelstahl.

Erfindungsgemäße Mehrfachketten können insbesondere Duplexketten oder Triplexketten sein, also Ketten mit jeweils zwei bzw. drei nebeneinander liegenden Buchsen auf jedem Kettenbolzen. Bei entsprechenden Vierfachketten oder Ketten mit mehr als vier nebeneinander liegenden Buchsen auf jedem Kettenbolzen kann man die Erfindung dahingehend modifizieren, dass die Belastbarkeit oder der Querschnitt der auf einem Kettenbolzen sitzenden Innenlaschen und/oder Zwischenlaschen von außen nach innen in mehreren Stufen abnimmt. Dabei bieten sich wieder Ausführungen an, bei denen die verschiedenen Querschnitte durch verschiedene Materialdicken realisiert sind. Dadurch lassen sich Mehrfachketten auch mit mehreren nebeneinander liegenden Buchsen bzw. Kettenreihen so auslegen, dass sich an jeder Lasche eine ungefähr gleich große Materialbelastung einstellt.

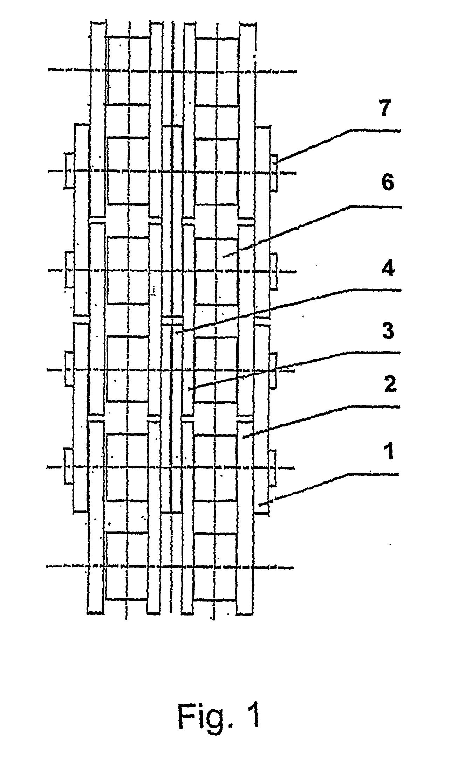

Ein Ausführungsbeispiel der Erfindung wird im folgenden anhand der Figur 1 beschrieben, welche eine als Rollenkette ausgeführte erfindungsgemäße Duplexkette als Draufsicht zeigt.

Als Bestandteile der abgebildeten Duplexkette sind in der Figur Außenlaschen 1, Innenlaschen 2 und 3, Zwischenlaschen 4, Rollen 6 und Kettenbolzen 7 zu erkennen. Nicht zu sehen sind in der Figur Buchsen, welche auf den Kettenbolzen 7 sitzen, jeweils zwei Innenlaschen 2 und 3 miteinander verbinden und durch jeweils eine der Rollen 6 verdeckt sind. An jedem Ende der Kettenbolzen 7 sitzt eine der Außenlaschen 1, wobei jede Außenlasche 1 zwei aufeinander folgende Kettenbolzen 7 miteinander verbindet und auf diesen Kettenbolzen 7 durch Presspassung fest sitzend befestigt ist. Das gleiche gilt für die Zwischenlaschen 4, von denen jeweils zwei unmittelbar aneinander liegend mittig zwischen zwei Außenlaschen 1 auf denselben Kettenbolzen 7 sitzen. Von den nicht erkennbaren Buchsen sitzen zwei auf jedem Kettenbolzen 7, jeweils eine zwischen einer Außenlasche und einer Zwischenlasche. Dabei sind diese Buchsen drehbar um die Kettenbolzen 7 gelagert und tragen an ihren Enden zwei Innenlaschen 2 und 3, von denen eine Innenlasche 2 zu einer Außenlasche 1, die andere Innenlasche 3 zu einer Zwischenlasche 4 nächstliegend angeordnet ist.

Die Innenlaschen 2 und 3 sind wiederum durch Presspassung fest mit den entsprechenden Buchsen verbunden.

Die den Zwischenlaschen 4 nächstliegenden Innenlaschen 3 haben dabei eine Dicke von lediglich etwa 75% der Dicke der den Außenlaschen 1 nächstliegenden Innenlaschen 2, denen sie ansonsten gleichen. Die Zwischenlaschen 4 haben eine den ihnen nächstliegenden Innenlaschen 3 entsprechende Dicke, wogegen die Außenlaschen 1 so dick ausgeführt sind wie die den Außenlaschen 1 nächstliegenden Innenlaschen 2. Dadurch wird eine gleichmäßige Materialbelastung aller Laschen erreicht und damit eine bei gegebenem Materialaufwand optimale Belastbarkeit der Duplexkette. In gleicher Weise wäre dazu eine Ausführung denkbar, bei denen zwischen zwei innen liegenden Innenlaschen 3 auf jedem Kettenbolzen 7 nur eine Zwischenlasche 4 angeordnet ist, die dafür aber im besten Fall von ungefähr doppelter Dicke wäre.

Alle Bestandteile der abgebildeten Duplexkette sind aus gehärtetem Chromnickelstahl gefertigt, wobei auch andere Stahlsorten für entsprechende Duplex- oder Mehrfachketten in Frage kämen. Abgesehen von den unterschiedlichen Dicken haben die Außenlaschen 1, die Innenlaschen 2 und 3 und die Zwischenlaschen 4 der abgebildeten Duplexkette eine identische äußere Form.

## Patentansprüche

1. Mehrfachkette mit durch Kettenbolzen (7) gelenkig miteinander verbundenen Kettengliedern, bei der sich in Längsrichtung der Mehrfachkette jeweils ein zumindest aus zwei Außenlaschen und mindestens einer Zwischenlasche (4) gebildetes Kettenglied mit einem zumindest aus vier Innenlaschen (2, 3) gebildetem Kettenglied abwechselt, wobei auf jedem Kettenbolzen (7) außen zwei Außenlaschen (1) sitzen, zwischen denen mindestens zwei auf dem Kettenbolzen (7) gelagerte Buchsen angeordnet sind, wobei ferner an jedem Ende jeder Buchse jeweils eine Innenlasche (2, 3) sitzt und zwischen zwei Buchsen wiederum jeweils mindestens eine auf dem Kettenbolzen (7) sitzende Zwischenlasche (4) angeordnet ist, **dadurch gekennzeichnet, dass** die einer Zwischenlasche (4) nächstliegenden Innenlaschen (3) eine geringere Belastbarkeit haben als die einer Außenlasche (1) nächstliegenden Innenlaschen (2).

2. Mehrfachkette nach Anspruch 1, **dadurch gekennzeichnet, dass** die geringere Belastbarkeit durch einen geringeren Querschnitt der entsprechenden Innenlasche (3) realisiert ist.

3. Mehrfachkette nach Anspruch 2, **dadurch gekennzeichnet, dass** der geringere Querschnitt durch eine geringere Dicke der entsprechenden Innenlasche (3) realisiert ist.

4. Mehrfachkette nach Anspruch 2, **dadurch gekennzeichnet, dass** der geringere Querschnitt durch eine geringere Höhe der entsprechenden Innenlasche (3) realisiert ist.

5. Mehrfachkette nach Anspruch 1, **dadurch gekennzeichnet, dass** die geringere Belastbarkeit einer weiter innen liegenden Innenlasche (3) durch ein schwächeres Material bedingt ist.

6. Mehrfachkette nach einem der Ansprüche 1 bis 4, **dadurch gekennzeichnet, dass** die einer Zwischenlasche (4) nächstliegenden Innenlaschen (3) einen Querschnitt von zwischen 65% und 85% des Querschnitts der den Außenlaschen (1) nächstliegenden Innenlaschen (2) haben.

7. Mehrfachkette nach einem der Ansprüche 1 bis 6, **dadurch gekennzeichnet, dass** die Außenlaschen (1) einen vom Querschnitt der diesen nächstliegenden Innenlaschen (2) um nicht mehr als 5% abweichenden Querschnitt haben.

8. Mehrfachkette nach einem der Ansprüche 1 bis 7, **dadurch gekennzeichnet, dass** zwischen zwei auf einem Kettenbolzen (7) benachbart angeordneten Buchsen jeweils eine Zwischenlasche (4) sitzt mit einem Querschnitt, der doppelt so groß ist wie der jeweilige Querschnitt der beiden dazu nächstliegenden Innenlaschen (3) oder davon um nicht mehr als 5% abweicht.

9. Mehrfachkette nach einem der Ansprüche 1 bis 8, **dadurch gekennzeichnet, dass** zwischen zwei auf einem Kettenbolzen (7) benachbart angeordneten Buchsen jeweils zwei gleichartige Zwischenlaschen (4) sitzen, jeweils mit einem der dazu nächstliegenden Innenlasche (3) identischen oder davon nicht mehr als 5% abweichenden Querschnitt.

10. Mehrfachkette nach einem der Ansprüche 1 bis 9, **dadurch gekennzeichnet, dass** auf jeder Buchse eine drehbar gelagerte, ebenfalls buchsenförmige Rolle (6) angeordnet ist.

11. Mehrfachkette nach einem der Ansprüche 1 bis 10, **dadurch gekennzeichnet, dass** die Außenlaschen (1) und/oder die Zwischenlaschen (4) auf jeweils zwei aufeinander folgenden Kettenbolzen (7) festsitzend befestigt sind.

12. Mehrfachkette nach einem der Ansprüche 1 bis 11, **dadurch gekennzeichnet, dass** die Innenlaschen (2, 3) mit jeweils zwei in Längsrichtung der Mehrfachkette aufeinander folgenden Buchsen aus einem Stück gefertigt oder festsitzend auf diesen befestigt sind.

13. Mehrfachkette nach einem der Ansprüche 1 bis 12, **dadurch gekennzeichnet, dass** sie aus Stahl oder Chromnickelstahl gefertigt ist.

14. Mehrfachkette nach einem der Ansprüche 1 bis 13, **dadurch gekennzeichnet, dass** auf jedem Kettenbolzen (7) zwei Buchsen und vier Innenlaschen (2, 3) sitzen.

15. Mehrfachkette nach einem der Ansprüche 1 bis 13, **dadurch gekennzeichnet, dass** auf jedem Kettenbolzen (7) drei Buchsen und sechs Innenlaschen (2, 3) sitzen.

16. Mehrfachkette nach einem der Ansprüche 1 bis 13, **dadurch gekennzeichnet, dass** auf jedem Kettenbolzen (7) vier Buchsen und acht Innenlaschen (2, 3) sitzen.

17. Mehrfachkette nach Anspruch 15 oder 16, **dadurch gekennzeichnet, dass** die auf einem Kettenbolzen (7) sitzenden Innenlaschen (2, 3) und/oder Zwischenlaschen (4) eine von außen nach innen abnehmende Belastbarkeit haben.

18. Mehrfachkette nach Anspruch 17, **dadurch gekennzeichnet, dass** die geringe Belastbarkeit weiter innen liegender Innenlaschen (3) und/oder Zwischenlaschen (4) durch ein schwächeres Material oder einen geringeren Querschnitt der entsprechenden Innenlaschen (3) bzw. Zwischenlaschen (4) bedingt ist.

## Claims

1. Multiple chain with chain links jointably connected with each other by means of chain bolts (7), whereby one chain link formed from at least two outer tabs and at least one interim tab (4) each alternates with a chain link formed from at least four inner tabs (2, 3) in a longitudinal direction of the multiple chain, whereby two outer tabs (1) are located on the outside of each chain bolt (7), between which at least two bushes are bearingly positioned on the chain bolt (7), whereby in addition an inner tab (2, 3) is located at each end of each bush, and in turn at least one interim tab (4) is located on the chain bolt (7) between two bushes, **characterised in that** the inner tabs (3) located nearest to an interim tab (4) are less able to bear a load than the inner tabs (2) located nearest to an outer tab (1).

2. Multiple chain according to Claim 1, **characterised in that** the reduced ability to bear a load is realised by means of a smaller cross-section of the relevant inner tab (3).

3. Multiple chain according to Claim 2, **characterised in that** the smaller cross-section is realised by means of a reduced thickness of the relevant inner tab (3).

4. Multiple chain according to Claim 2, **characterised in that** the smaller cross-section is realised by means of a reduced height of the relevant inner tab (3).

5. Multiple chain according to Claim 1, **characterised in that** the reduced ability to bear a load of an inner tab (3) positioned further towards the inside is due to a weaker material.

6. Multiple chain according to one of the Claims 1 to 4, **characterised in that** the inner tabs (3) located nearest to an interim tab (4) have a cross-section of between 65% and 85% of the cross-section of the inner tabs (2) located nearest to the outer tabs (1).

7. Multiple chain according to one of the Claims 1 to 6, **characterised in that** the outer tabs (1) have a cross-section that is no more than 5% different from the cross-section of the nearest inner tabs (2).

8. Multiple chain according to one of the Claims 1 to 7, **characterised in that** one interim tab (4) each is located between two bushes located adjacently on a chain bolt (7), the cross-section of which is twice as large as the relevant cross-section of the two inner tabs (3) located nearest the same, or does not differ from the same by more than 5%.

9. Multiple chain according to one of the Claims 1 to 8, **characterised in that** two identical interim tabs (4) are located between two bushes located adjacently to each other on a chain bolt (7), each with a cross-section identical to the inner tab (3) nearest to the same, or different from the same by no more than 5%.

10. Multiple chain according to one of the Claims 1 to 9, **characterised in that** a rotatably borne cylinder (6) that is also bush-shaped is located on each of the bushes.

11. Multiple chain according to one of the Claims 1 to 10, **characterised in that** the outer tabs (1) and/or the interim tabs (4) are firmly affixed to two adjacent chain bolts (7) each.

12. Multiple chain according to one of the Claims 1 to 11, **characterised in that** the inner tabs (2, 3) are manufactured in a single piece with two bushes adjacent to each other in the longitudinal direction of the multiple chain, or affixed onto the same.

13. Multiple chain according to one of the Claims 1 to 12, **characterised in that** the same is made of steel or chrome nickel steel.

14. Multiple chain according to one of the Claims 1 to 13, **characterised in that** two bushes and four inner tabs (2, 3) are located on each chain bolt (7).

15. Multiple chain according to one of the Claims 1 to 13, **characterised in that** three bushes and six inner tabs (2, 3) are positioned on each chain bolt (7).

16. Multiple chain according to one of the Claims 1 to 13, **characterised in that** four bushes and eight inner tabs (2, 3) are located on each chain bolt (7).

17. Multiple chain according to Claim 15 or 16, **characterised in that** the ability of the inner tabs (2, 3) and/or interim tabs (4) located on a chain bolt (7) to bear a load decreases from the outside in.

18. Multiple chain according to Claim 17, **characterised in that** the reduced ability of the innermost positioned inner tabs (3) and/or the interim tabs (4) to bear a load is due to a weaker material or a smaller cross-section of the relevant inner tabs (3), i.e. interim tabs (4).

## Revendications

1. Chaîne multiple, comprenant des maillons de chaîne reliés entre eux de façon articulée par des tourillons de chaîne (7), dans laquelle un maillon de chaîne formé au moins de deux mailles extérieures et d'au moins une maille intermédiaire (4) alterne à chaque fois, dans le sens longitudinal de la chaîne multiple, avec un maillon formé d'au moins quatre mailles intérieures (2, 3), deux mailles extérieures (1) étant situées à l'extérieur sur chaque tourillon de chaîne (7), mailles extérieures entre lesquelles sont disposés au moins deux douilles logées sur le tourillon de chaîne (7), une maille intérieure (2, 3) étant située en plus à chaque extrémité de chaque douille et à chaque fois au moins une maille intermédiaire (4) située sur le tourillon de chaîne (7) étant disposée à son tour entre deux douilles, **caractérisée en ce que** les mailles intérieures (3) les plus proches d'une maille intermédiaire (4) ont une capacité de charge plus faible que les mailles intérieures (2) les plus proches d'une maille extérieure (1).

2. Chaîne multiple selon la revendication 1, **caractérisée en ce que** la plus faible capacité de charge est réalisée par une section plus faible de la maille intérieure correspondante (3).

3. Chaîne multiple selon la revendication 2, **caractérisée en ce que** la section plus faible est réalisée par une épaisseur plus faible de la maille intérieure correspondante (3).

4. Chaîne multiple selon la revendication 2, **caractérisée en ce que** la section plus faible est réalisée par une hauteur plus faible de la maille intérieure correspondante (3).

5. Chaîne multiple selon la revendication 1, **caractérisée en ce que** la plus faible capacité de charge d'une maille intérieure (3) située davantage à l'intérieur est due à un matériau plus faible.

6. Chaîne multiple selon l'une quelconque des revendications 1 à 4, **caractérisée en ce que** les mailles intérieures (3) situées les plus près d'une maille intermédiaire (4) ont une section représentant entre 65 % et 85 % de la section des mailles intérieures (2) situées les plus près des mailles extérieures (1).

7. Chaîne multiple selon l'une quelconque des revendications 1 à 6, **caractérisée en ce que** les mailles extérieures (1) ont une section qui ne diffère pas de plus de 5 % de la section des mailles intérieures (2) les plus proches de ces mailles extérieures.

8. Chaîne multiple selon l'une quelconque des revendications 1 à 7, **caractérisée en ce que** entre deux douilles disposées à proximité sur un tourillon de chaîne (7) est disposée à chaque fois une maille intermédiaire (4) avec une section qui est deux fois plus grande que la section respective des deux mailles intérieures (3) situées les plus près de cette maille intermédiaire ou ne diffère pas de plus de 5 % de cette section.

9. Chaîne multiple selon l'une quelconque des revendications 1 à 8, **caractérisée en ce que** entre deux douilles disposées à proximité sur un tourillon de chaîne (7) sont situées à chaque fois deux mailles intermédiaires (4) de même type, à chaque fois avec une section identique à la maille intérieure (3) située la plus près de cette maille intermédiaire ou une section qui ne diffère pas de plus de 5 % par rapport à cette maille intermédiaire.

10. Chaîne multiple selon l'une quelconque des revendications 1 à 9, **caractérisée en ce qu'**un rouleau (6) logé de façon rotative et également en forme de douille est disposé sur chaque douille.

11. Chaîne multiple selon l'une quelconque des revendications 1 à 10, **caractérisée en ce que** les mailles extérieures (1) et/ou les mailles intermédiaires (4) sont fixées de façon fixe sur respectivement deux tourillons de chaîne (7) consécutifs.

12. Chaîne multiple selon l'une quelconque des revendications 1 à 11, **caractérisée en ce que** les mailles intérieures (2, 3) sont fabriquées d'une seule pièce avec à chaque fois deux douilles successives dans le sens longitudinal de la chaîne multiple ou sont fixées à demeure sur ces douilles.

13. Chaîne multiple selon l'une quelconque des revendications 1 à 12, **caractérisée en ce qu'**elle est fabriquée en acier ou en acier au nickel-chrome.

14. Chaîne multiple selon l'une quelconque des revendications 1 à 13, **caractérisée en ce que** deux douilles et quatre mailles intérieures (2,3) sont situées sur chaque tourillon de chaîne (7).

15. Chaîne multiple selon l'une quelconque des revendications 1 à 13, **caractérisée en ce que** trois douilles et six mailles intérieures (2, 3) sont situées sur chaque tourillon de chaîne (7).

16. Chaîne multiple selon l'une quelconque des revendications 1 à 13, **caractérisée en ce que** quatre douilles et huit mailles intérieures (2, 3) sont situées sur chaque tourillon de chaîne (7).

17. Chaîne multiple selon la revendication 15 ou 16, **caractérisée en ce que** les mailles intérieures (2, 3) situées sur un tourillon de chaîne (7) et/ou des mailles intermédiaires (4) ont une capacité de charge décroissant de l'extérieur vers l'intérieur.

18. Chaîne multiple selon la revendication 17, **caractérisée en ce que** la faible capacité de charge de mailles intérieures (3) et/ou de mailles intermédiaires (4) situées davantage à l'intérieur est conditionnée par un matériau plus faible ou une section plus faible des mailles intérieures (3) ou mailles intermédiaires (4) correspondantes.
